# EUROPEAN PATENT APPLICATION

(11) **EP 3 851 709 A1**
(43) Date of publication of application: **21.07.2021**
(21) Application number: 19860496.9
(22) Date of filing: 13.09.2019
(51) Int. Cl.: F16J 15/34

(54) **VERTICAL SEALING DEVICE**

(30) Priority: 14.09.2018 JP 2018173005
(71) Applicant: EagleBurgmann Japan Co., Ltd., Tokyo 105-8587 (JP)
(72) Inventor: KITO Masakazu, Tokyo 105-8587 (JP)
(74) Representative: WSL Patentanwälte Partnerschaft mbB
(86) International application number: PCT/JP2019/036077
(87) International publication number: WO 2020/054842

(57) **Abstract**

There is provided a vertical sealing device capable of preventing foreign matter from entering a seal portion from the outside of a machine.

In a vertical sealing device 1 with a seal portion S axially sealing a rotating shaft 2 provided in a machine and extending in a vertical direction, an annular collar portion 5a which extends in an outward radial direction from a radial gap G2 between a rotational side element 5 and a stationary side element 6 is provided in the rotational side element 5 so as to be located on an outside of the machine with relation to the seal portion S.

## Description

### {TECHNICAL FIELD}

The present invention relates to a vertical sealing device that axially seals a rotating shaft extending in the up and down direction.

### {BACKGROUND ART}

Pumps, agitators, and the like are operated using a driving force transmitted from a rotating shaft and a vertical sealing device axially seals the rotating shaft extending in the up and down direction so as to prevent a fluid from leaking from the inside to the outside of a machine or vice versa.

As such a vertical sealing device, for example, a mechanical seal (also referred to as a sealing device) shown in Patent Citation 1 is a vertical mechanical seal used to axially seal a rotating shaft of an agitator extending in the up and down direction and mainly includes a seal casing which is attached to a machine housing, a holder which is held in the seal casing, a spring which is disposed between the seal casing and the holder, a stationary seal ring which is fixed to the seal casing through the holder, and a rotational seal ring which is fixed to the rotating shaft through a sleeve and is relatively rotatable with respect to the stationary seal ring. Here, a seal portion is formed by allowing sealing faces facing each other in the up and down direction in the stationary seal ring and the rotational seal ring to closely slide on each other, so that an inside area where a sealed fluid is placed and an outside area on the atmosphere side are covered.

### {CITATION LIST}

### {Patent Literature}

Patent Citation 1: JP 2009-24836 A (Page 5, FIG. 1)

### {SUMMARY OF INVENTION}

### {Technical Problem}

The mechanical seal of Patent Citation 1 covers the inside area and the outside area by allowing the sealing faces of the stationary seal ring and the rotational seal ring to closely slide on each other so as to form the seal portion. Accordingly, it is possible to prevent the leakage of the sealed fluid from the inside area to the outside area and to prevent the intrusion of the atmosphere from the outside area to the inside area. However, since the vertical sealing device is applied to the rotating shaft extending in the up and down direction, there is concern that foreign matter such as dirt, dust, and oil drops enters the seal portion from the outside of the machine through a gap formed on the outside (i.e., the upper side) of the machine in relation to the seal portion between an outer peripheral surface of a rotational side element such as a sleeve rotating together with the rotating shaft and an inner peripheral surface of a stationary side element such as a seal casing, a holder, and a stationary seal ring fixed to the machine housing.

The present invention has been made in view of these problems and an object is to provide a vertical sealing device capable of preventing foreign matter from entering a seal portion from the outside of a machine.

### {Solution to Problem}

In order to solve the foregoing problems, a vertical sealing device according to the present invention is a vertical sealing device with a seal portion axially sealing a rotating shaft provided in a machine and extending in a vertical direction, in which an annular collar portion which extends in an outward radial direction from a radial gap between a rotational side element and a stationary side element is provided in the rotational side element so as to be located on the outside of the machine with relation to the seal portion. According to the aforesaid feature of the present invention, since the radial gap between the rotational side element and the stationary side element is covered by the annular collar portion on the outside of the machine, it is possible to prevent foreign matter from entering the seal portion from the outside of the machine.

It may be preferable that a hanging piece is formed so as to extend downward from the annular collar portion. According to this preferable configuration, it is possible to block the foreign matter that comes around from the distal end of the annular collar portion by the hanging piece.

IT may be preferable that the hanging piece is inserted into an annular recess portion provided in the stationary side element and the annular recess portion is provided with a through-hole which extends in the outward radial direction so as to open to the outside of the machine. According to this preferable configuration, since the foreign matter blocked by the hanging piece is trapped in the annular recess portion, the foreign matter is less likely to enter the seal portion and the foreign matter trapped in the annular recess portion can be discharged to the outside of the machine through the through-hole.

It may be preferable that the through-hole is inclined so as to be lowered from the annular recess portion toward the outward radial direction. According to this preferable configuration, the foreign matter can be easily discharged from the annular recess portion to the outside of the machine by using the inclination of the through-hole.

It may be preferable that the hanging piece has an enlarged portion formed at a distal end side thereof, and the annular recess portion is formed such that an inner peripheral surface of the annular recess portion is provided along the enlarged portion. According to this preferable configuration, since the foreign matter entering the radial gap between the hanging piece and the annular recess portion is guided to the outer radial side of the annular recess portion along the enlarged portion of the hanging piece, the foreign matter can be easily discharged to the outside of the machine through the through-hole.

It may be preferable that the annular collar portion is fixed to a sleeve by a fixing member, the sleeve being fixed to the rotating shaft. According to this preferable configuration, the annular collar portion and the hanging piece can be easily positioned in the axial direction.

It may be preferable that the hanging piece is formed in an annular shape. According to this preferable configuration, the annular hanging piece can prevent the foreign matter from entering in the circumferential direction.

It may be more preferable that the through-hole is connected to a bottom surface of the annular recess portion. According to this more preferable configuration, the foreign matter entering the annular recess portion can be reliably guided into the through-hole.

It may be more preferable that a circumferential edge on the inner radial side of the annular recess portion is provided with an annular protrusion extending in the outer radial direction. According to this more preferable configuration, the foreign matter entering the seal portion from the inner radial side of the annular recess portion can be regulated by the annular protrusion.

It may be more preferable that the stationary side element is provided with a cover which covers an opening of the through-hole on the outside of the machine from above. According to this more preferable configuration, it is possible to prevent the foreign matter from entering the annular recess portion from the outside of the machine through the through-hole.

### {BRIEF DESCRIPTION OF DRAWINGS}

FIG. 1 is a cross-sectional view illustrating a structure of a vertical sealing device according to a first embodiment of the present invention.
FIG. 2 is a cross-sectional view illustrating a structure of a vertical sealing device according to a second embodiment of the present invention.
FIG. 3 is a cross-sectional view illustrating a structure of a vertical sealing device according to a third embodiment of the present invention.

### {DESCRIPTION OF EMBODIMENTS}

Modes for implementing a vertical sealing device according to the present invention will be described on the basis of embodiments.

### {First embodiment}

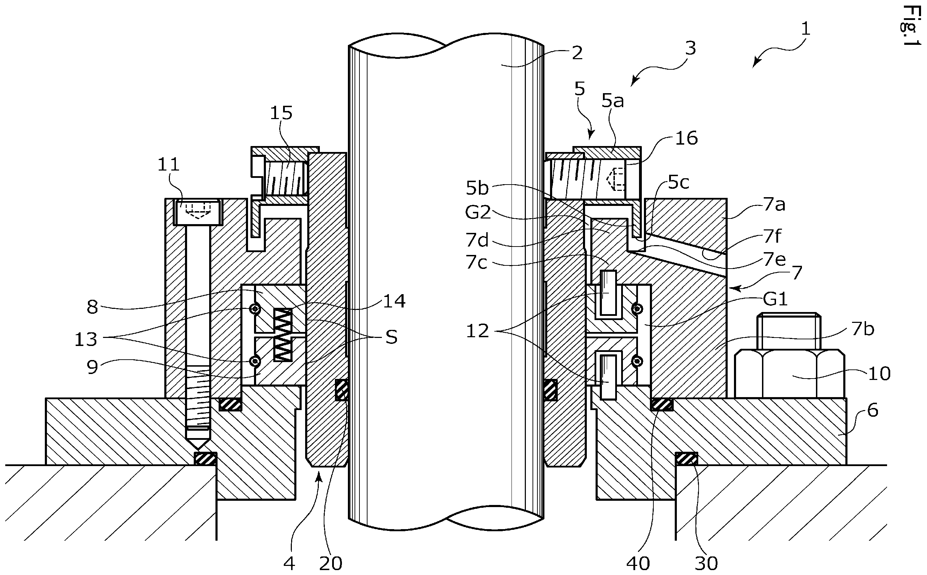

A vertical sealing device according to a first embodiment of the present invention will be described with reference to FIG. 1. In the first embodiment, a description will be made on the assumption that the left side of the drawing is the outside of the machine and the right side of the drawing is the inside of the machine.

As illustrated in FIG. 1, a vertical sealing device 1 of this embodiment mainly includes a sleeve 4 which is provided between a housing 3 and a rotating shaft 2 extending in the up and down direction corresponding to the vertical direction of a rotating machine such as a pump or an agitator and is a rotational side element fixed to the outer periphery of the rotating shaft 2 in a sealed state through an O-ring 20, an annular roof member 5 that is a rotational side element fixed to the rotating shaft 2 through the sleeve 4, a first seal casing 6 which is a stationary side element fixed to the housing 3 by a fixing bolt nut 10, a second seal casing 7 which is a stationary side element integrally fixed to the first seal casing 6 by a fixing bolt 11, and a pair of seal rings 8 and 9 (i.e., stationary side elements) which are prevented from rotating by rotation preventing members 12 respectively extending in the up and down direction from the facing end surfaces of the first seal casing 6 and the second seal casing 7. In addition, the sleeve 4 is fixed to the rotating shaft 2 by a set screw 16 so as not to be movable relatively. Further, the first seal casing 6 is fixed to the housing 3 in a sealed state through an O-ring 30 and the second seal casing 7 is fixed to the first seal casing 6 in a sealed state through an O-ring 40.

Next, the seal rings 8 and 9 will be described. As illustrated in FIG. 1, the seal rings 8 and 9 are arranged in the up and down direction in an annular gap G1 formed between the outer peripheral surface of the sleeve 4 and the second seal casing 7 in such a manner that the second seal casing 7 is fixed to the first seal casing 6. Further, the seal rings 8 and 9 are formed as segment seals obtained by combining split bodies (not illustrated) respectively divided in the circumferential direction in an annular shape. Annular extension springs 13 which are respectively attached to the circumferential grooves provided in the outer peripheral surfaces of the seal rings 8 and 9 are compressed in the radial direction so that the seal rings 8 and 9 are urged toward the inner radial side (that is, the outer peripheral surface of the sleeve 4). The inner peripheral surfaces of the seal rings 8 and 9 are allowed to closely side on the outer peripheral surface of the sleeve 4 so as to form the seal portion S. Further, the seal rings 8 and 9 are respectively urged in the up and down direction (that is, the axial direction) by a compression spring 14 disposed between the facing end surfaces so as to be held and pressed against the first seal casing 6 and the second seal casing 7 in a sealed state.

Next, the second seal casing 7 will be described. As illustrated in FIG. 1, the second seal casing 7 is formed in a substantially cylindrical shape including a first cylindrical portion 7a formed on the outer end surface of the machine and having a counter bore hole for accommodating the head portion of the fixing bolt 11, a second cylindrical portion 7b formed on the inside of the machine of the first cylindrical portion 7a and having an inner diameter larger than that of the first cylindrical portion 7a, an inward flange portion 7c extending in the inner radial direction from the inside of the machine of the inner peripheral surface of the first cylindrical portion 7a, and an annular convex portion 7d extending from the inner radial side of the inward flange portion 7c to the upper side (that is, the outside of the machine) and the inner radial portion of the second seal casing 7 on the outside of the machine is provided with an annular recess portion 7e which opens upward by the inner peripheral surface of the first cylindrical portion 7a, the end surface of the inward flange portion 7c on the outside of the machine, and the outer peripheral surface of the annular convex portion 7d. In addition, since the annular gap G1 where the seal rings 8 and 9 are disposed are formed on the inner radial side of the second cylindrical portion 7b of the second seal casing 7, the annular recess portion 7e is formed on the outside of the machine in relation to the annular gap G1, that is, the outside of the machine in relation to the seal portion S.

Further, the second seal casing 7 is provided with a through-hole 7f which extends in the outer radial direction so as to open to the outside of the machine from the annular recess portion 7e. The through-hole 7f is formed such that the opening on the side of the annular recess portion 7e is formed from the bottom surface (that is, the end surface of the inward flange portion 7c on the outside of the machine) to the side surface on the outer radial side (that is, the inner peripheral surface of the first cylindrical portion 7a). Further, the through-hole 7f is inclined downward so as to be lowered from the bottom surface of the annular recess portion 7e in the outer radial direction and the lower end of the opening on the outside of the machine is formed at a position lower than the bottom surface of the annular recess portion 7e.

Next, the roof member 5 will be described. As illustrated in FIG. 1, the roof member 5 includes an annular collar portion 5a which extends in the outer radial direction from a radial gap G2 between the outer peripheral surface of the sleeve 4 and the inner peripheral surface of the annular convex portion 7d of the second seal casing 7 and a hanging piece 5b which extends downward from the front end of the annular collar portion 5a and has an annular shape (in other words, a cylindrical plate shape) and the front end portion of the hanging piece 5b is inserted into the annular recess portion 7e formed in the second seal casing 7. The hanging piece 5b is inserted to a substantially axial center position of the annular recess portion 7e or the annular convex portion 7d and a lower end 5c of the hanging piece 5b is disposed below the upper end of the opening on the side of the annular recess portion 7e of the through-hole 7f. In addition, since the roof member 5 is fixed to the outer peripheral surface of the sleeve 4 so as not to be relatively movable by a set screw 15 which is a fixing member screwed in the radial direction while being externally fitted to the end portion of the sleeve 4 on the outside of the machine, the lower end 5c of the hanging piece 5b can be easily positioned in the axial direction inside the annular recess portion 7e.

Accordingly, in the vertical sealing device 1 of this embodiment, since the radial gap G2 between the outer peripheral surface of the sleeve 4 and the inner peripheral surface of the second seal casing 7 is covered by the annular collar portion 5a of the roof member 5 from the outside of the machine (that is, the upper side), it is possible to prevent the foreign matter from entering the seal portion S from the outside of the machine. Further, it is possible to block the foreign matter that comes around from the front end of the annular collar portion 5a in the circumferential direction by the annular hanging piece 5b extending downward from the front end of the annular collar portion 5a. In addition, the foreign matter that enters the radial gap G2 between the outer peripheral surface of the hanging piece 5b and the inner peripheral surface of the first cylindrical portion 7a of the second seal casing 7 is guided downward along the outer peripheral surface of the hanging piece 5b.

Further, since the front end portion of the hanging piece 5b is inserted into the annular recess portion 7e provided in the second seal casing 7 and the foreign matter guided downward along the outer peripheral surface of the hanging piece 5b is trapped in the annular recess portion 7e, the foreign matter is less likely to enter the seal portion S. Further, since the annular recess portion 7e is provided with the through-hole 7f extending in the outer radial direction so as to open to the outside of the machine, the foreign matter trapped in the annular recess portion 7e can be discharged to the outside of the machine through the through-hole 7f.

Further, since the opening on the side of the annular recess portion 7e of the through-hole 7f is connected to the bottom surface of the annular recess portion 7e, the foreign matter entering the annular recess portion 7e can be reliably guided into the through-hole 7f. Further, since the lower end 5c of the hanging piece 5b is disposed below the upper end of the opening on the side of the annular recess portion 7e of the through-hole 7f, the foreign matter moving downward along the outer peripheral surface of the hanging piece 5b is easily guided into the through-hole 7f.

Further, the through-hole 7f is inclined so as to be lowered in the outer radial direction from the bottom surface of the annular recess portion 7e and the foreign matter is easily discharged from the annular recess portion 7e to the outside of the machine by using the inclination of the through-hole 7f. In addition, the through-hole 7f may not be inclined downward. Further, the foreign matter may be actively discharged through the through-hole 7f by sucking the foreign matter from the opening of the through-hole 7f on the outside of the machine.

Further, since the roof member 5 including the annular collar portion 5a and the hanging piece 5b is the rotational side element rotating together with the rotating shaft 2, the foreign matter adhering to the outer peripheral surface of the hanging piece 5b or the surface of the annular collar portion 5a can be blown with centrifugal force in the outer radial direction by rotating the roof member 5. At this time, since the foreign matter adhering to the hanging piece 5b is blown in the outer radial direction, the foreign matter is guided into the annular recess portion 7e along the inner peripheral surface of the first cylindrical portion 7a of the second seal casing 7 and is easily discharged from the through-hole 7f to the outside of the machine. Particularly, the foreign matter which moves along the outer peripheral surface of the hanging piece 5b to the lower end 5c is blown in the outer radial direction from the lower end 5c of the hanging piece 5b, so that the foreign matter can be easily guided to the opening on the side of the annular recess portion 7e of the through-hole 7f. In this way, the vertical sealing device 1 can prevent the foreign matter from entering the seal portion S from the outside of the machine regardless of the stop state and the operation state.

### {Second embodiment}

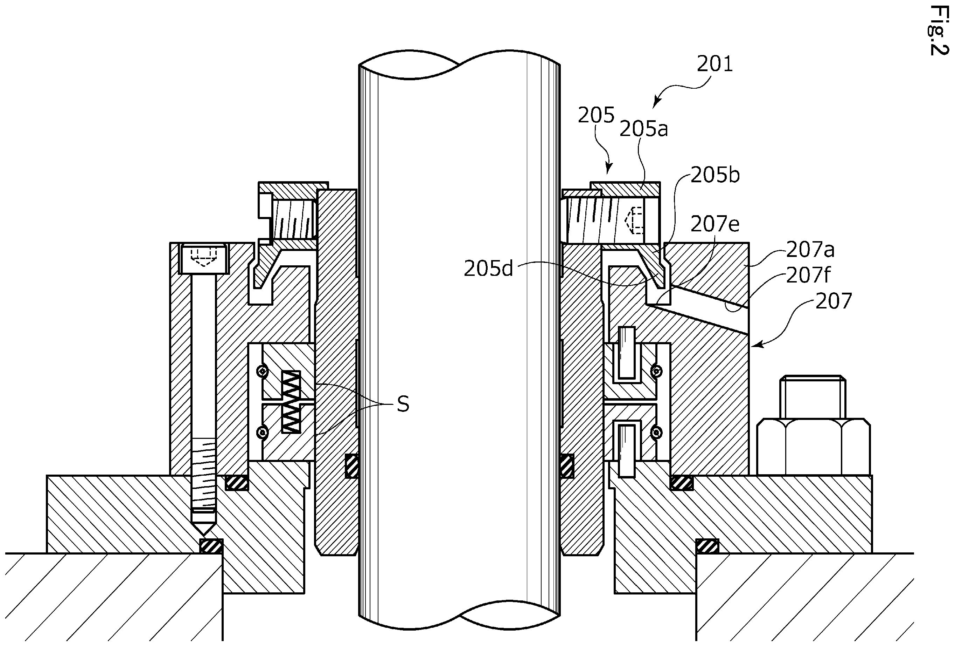

Next, a vertical sealing device according to a second embodiment of the present invention will be described with reference to FIG. 2. In addition, the same reference numerals will be given to the same parts as those of the above-described embodiment and redundant description will be omitted.

A vertical sealing device 201 according to the second embodiment will be described. As illustrated in FIG. 2, in this embodiment, a roof member 205 includes an enlarged portion 205d formed at a front end side of an annular hanging piece 205b extending downward from a front end of an annular collar portion 205a and an annular recess portion 207e of a second seal casing 207 is formed such that a side surface on the outer radial side (that is, an inner peripheral surface of a first cylindrical portion 207a) is formed along the enlarged portion 205d of the hanging piece 205b.

Accordingly, since the foreign matter entering the radial gap between the hanging piece 205b of the roof member 205 and the annular recess portion 207e of the second seal casing 207 is guided to the outer radial side of the annular recess portion 207e along the enlarged portion 205d of the hanging piece 205b, the foreign matter is easily discharged to the outside of the machine through the through-hole 207f. Further, since the radial gap between the outer peripheral surface of the hanging piece 205b and the inner peripheral surface of the first cylindrical portion 207a of the second seal casing 207 is formed in a crank shape, the entering foreign matter easily contacts the outer peripheral surface of the enlarged portion 205d of the hanging piece 205b and the foreign matter is easily guided downward along the hanging piece 205b.

### {Third embodiment}

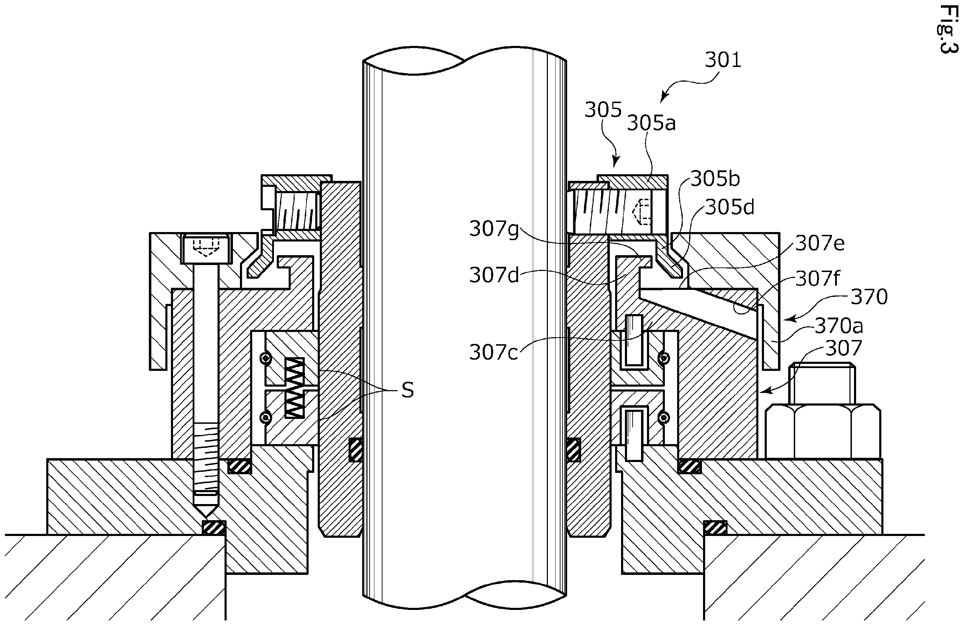

Next, a vertical sealing device according to a third embodiment of the present invention will be described with reference to FIG. 3. In addition, the same reference numerals will be given to the same parts as those of the above-described embodiment and redundant description will be omitted.

A vertical sealing device 301 according to the third embodiment will be described. As illustrated in FIG. 3, in this embodiment, a roof member 305 includes an enlarged portion 305d formed at a front end side of an annular hanging piece 305b extending downward from a front end of an annular collar portion 305a and the enlarged portion 305d is formed toward the front end so as to be inclined in the outer radial direction, the front end side being also referred to as a distal end side. Accordingly, the foreign matter guided downward along the hanging piece 305b is easily collected at the front end of the hanging piece 305b, the foreign matter is easily blown in the outer radial direction from the front end of the hanging piece 305b particularly by the rotation of the roof member 305, and the foreign matter is easily discharged to the outside of the machine through a through-hole 307f.

In a second seal casing 307, a first cylindrical portion is formed as a separate cover member 370 and the inner radial portion of the second seal casing 307 on the outside of the machine is provided with an annular recess portion 307e which is formed by an inner peripheral surface of the cover member 370, an end surface of an inward flange portion 307c of the second seal casing 307 on the outside of the machine, and an outer peripheral surface of an annular convex portion 307d of the second seal casing 307 so as to open upward.

The circumferential edge on the inner radial side of the annular recess portion 307e, that is, the outer peripheral surface of the annular convex portion 307d of the second seal casing 307 is provided with an annular protrusion 307g extending from the upper end portion in the outer radial direction. Accordingly, the foreign matter entering the seal portion S from the inner radial side of the annular recess portion 307e can be regulated by the annular protrusion 307g.

Further, the outer radial portion of the cover member 370 is provided with a cover 370a extending downward and the cover 370a covers the opening of the through-hole 307f on the outside of the machine while being slightly separated from the outer peripheral surface of the second seal casing 307 in the radial direction. Accordingly, it is possible to prevent the foreign matter from entering the annular recess portion 307e from the outside of the machine through the through-hole 307f by the cover 370a.

Although the embodiments of the present invention have been described above with reference to the drawings, a detailed configuration is not limited to these embodiments and modifications or additions in the scope not departing from the spirit of the present invention are also included in the present invention.

For example, in the above-described embodiments, a case in which the seal portion S of the vertical sealing device is formed by a segment seal has been described, but the present invention is not limited thereto. That is, the seal portion of the vertical sealing device may be formed by various seals such as a mechanical seal or a lip seal.

Further, the vertical sealing devices of the first and second embodiments may adopt the configuration of the annular protrusion 307g or the cover member 370 (that is, the cover 370a) of the vertical sealing device of the third embodiment.

Further, the roof member is not limited to the one fixed to the sleeve and may be directly fixed to the rotating shaft.

Further, the annular collar portion is not limited to the one formed on the roof member and may be integrally formed so as to extend from, for example, the outer periphery of the sleeve.

Further, the hanging piece is not limited to the one formed at the front end of the annular collar portion and may be formed at a position on the inner radial side of the front end of the annular collar portion. Further, the hanging piece is not limited to the one which is continuously formed in the circumferential direction in an annular shape and may be intermittently formed in the circumferential direction. Further, the front end portion of the hanging piece may not be inserted into the annular recess portion formed in the stationary side element.

Further, the annular collar portion may not be provided with the hanging piece and the front end side of the annular collar portion may be bent downward.

Further, the through-hole which communicates the annular recess portion with the outside of the machine may not be formed.

Further, the roof member, the first seal casing, the second seal casing, and the cover member are not limited to the annular shape, but may be formed by combining split bodies divided in the circumferential direction in an annular shape.

### {REFERENCE SIGNS LIST}

- 1: Vertical sealing device
- 2: Rotating shaft
- 3: Housing
- 4: Sleeve (rotational side element)
- 5: Roof member (rotational side element)
- 5a: Annular collar portion (rotational side element)
- 5b: Hanging piece (rotational side element)
- 6: First seal casing (stationary side element)
- 7: Second seal casing (stationary side element)
- 7a: First cylindrical portion
- 7b: Second cylindrical portion
- 7c: Inward flange portion
- 7d: Annular convex portion
- 7e: Annular recess portion
- 7f: Through-hole
- 8, 9: Seal ring (stationary side element)
- 15: Set screw (fixing member)
- 205: Roof member (rotational side element)
- 205a: Annular collar portion (rotational side element)
- 205b: Hanging piece (rotational side element)
- 205d: Enlarged portion (rotational side element)
- 207: Second seal casing (stationary side element)
- 305: Roof member (rotational side element)
- 305a: Annular collar portion (rotational side element)
- 305b: Hanging piece (rotational side element)
- 305d: Enlarged portion (rotational side element)
- 307: Second seal casing (stationary side element)
- 307g: Annular protrusion
- 370: Cover member (stationary side element)
- 370a: Cover
- G1: Annular gap
- G2: Gap
- S: Seal portion

## Claims

1. A vertical sealing device with a seal portion axially sealing a rotating shaft provided in a machine and extending in a vertical direction, wherein
an annular collar portion which extends in an outward radial direction from a radial gap between a rotational side element and a stationary side element is provided in the rotational side element so as to be located on an outside of the machine with relation to the seal portion.

2. The vertical sealing device according to claim 1,
wherein a hanging piece is formed so as to extend downward from the annular collar portion.

3. The vertical sealing device according to claim 2,
wherein the hanging piece is inserted into an annular recess portion provided in the stationary side element, and
wherein the annular recess portion is provided with a through-hole which extends in the outward radial direction so as to open to the outside of the machine.

4. The vertical sealing device according to claim 3,
wherein the through-hole is inclined so as to be lowered from the annular recess portion toward the outward radial direction.

5. The vertical sealing device according to claim 3 or 4,
wherein the hanging piece has an enlarged portion formed at a distal end side thereof, and
wherein the annular recess portion is formed such that an inner peripheral surface of the annular recess portion is provided along the enlarged portion.

6. The vertical sealing device according to any one of claims 1 to 5,
wherein the annular collar portion is fixed to a sleeve by a fixing member, the sleeve being fixed to the rotating shaft.

7. The vertical sealing device according to any one of claims 2 to 5,
wherein the hanging piece is formed in an annular shape.
